# EUROPEAN PATENT SPECIFICATION

(11) **EP 3 996 255 B1**
(45) Date of publication and mention of the grant of the patent: **12.06.2024**
(21) Application number: 20205752.7
(22) Date of filing: 04.11.2020
(51) Int. Cl.: H02K 5/20, H02K 15/14, H02K 9/197

(54) **STATOR COOLING HOUSING FOR A STATOR OF A ROTARY ELECTRIC MOTOR**
STATORKÜHLGEHÄUSE FÜR EINEN STATOR EINES ROTIERENDEN ELEKTROMOTORS
BOITIER DE REFROIDISSEMENT DE STATOR POUR UN STATOR DE MOTEUR ÉLECTRIQUE ROTATIF

(43) Date of publication of application: 11.05.2022
(73) Proprietor: ETEL S.A., 2112 Môtiers (CH)
(72) Inventor: Pourchet, Johann, 25650 La Chaux (FR)
(74) Representative: P&TS SA (AG, Ltd.)

(56) References cited:
- EP-A1- 2 680 408
- EP-A1- 3 480 929
- WO-A2-2014/026874
- CN-A- 101 087 084
- CN-A- 110 417 190
- DE-A1-102015 006 348
- DE-A1-102016 217 120
- DE-A1-102018 117 774

## Description

### Field of the invention

The present invention relates to a stator cooling housing for a stator of a rotary electric motor, to a stator comprising the stator cooling housing and to a rotary electric motor comprising such stator. The invention also relates to a method for manufacturing the stator cooling housing.

### Background of the invention

Many solutions for cooling a stator of a rotary electric motor already exist.

EP2680408, for example, discloses a cylindrical frame for enclosing and cooling an iron core of a rotary electrical motor. The cylindrical frame comprises two bundles of cooling ducts arranged on an outer lateral surface of the cylindrical frame. One of the bundles of cooling ducts guides cooling fluid from a coolant intake around circumference of the cylindrical frame. Coolant ducts, a reversal region and an outlet region are sealed by a cylindrical jacket that rests against an outer lateral surface of the frame. The jacket includes a slot arranged between the bundles of cooling ducts and between an intake region and the outlet region and is welded to the frame along the slot.

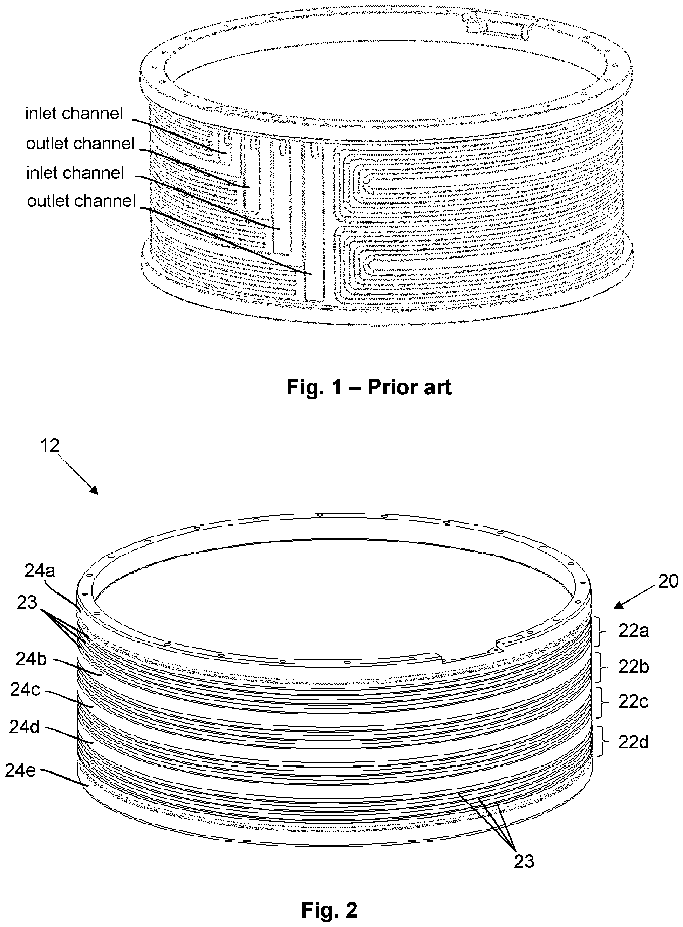

Figure 1 shows a cylindrical frame for cooling an iron core of a stator of a rotary electric motor according to another prior art, wherein the cylindrical frame is adapted to form two distinct cooling circuits comprising each an inlet and an outlet port when a jacket is shrink fitted around the outer lateral surface of the frame.

These cylindrical frames have the advantage of being compact and having the cooling inlets and outlets on the same upper housing surface. The shape of the inlet and outlet channels must however by produced by milling which is a lengthy process which negatively impact the cost of the motor.

DE102015006348 discloses a cooling jacket for mounting on the circumference of an electrical machine, having a cover element which is arranged at a distance from the cooling jacket such that a coolant channel for receiving a coolant is formed between the cooling jacket and the cover element. A separation ridge is mounted on the cooling jacket to separate an inlet area from outlet area in a fluid-tight manner.

An aim of the present invention is therefore to provide a stator cooling housing that is easy to manufacture and therefore cost-effective.

Another aim of the present invention is to provide a stator cooling housing with an improved ratio between its overall magnetic performance and its footprint.

### Brief summary of the invention

These aims are achieved by a stator cooling housing for a stator of a rotary electric motor. The stator cooling housing comprises a cylindrical frame adapted to be mounted around an iron core and having an outer lateral surface with cylindrical grooves or fins. The cylindrical housing further comprises at least one inlet and at least one outlet channel and a recess on a portion of the outer lateral surface of the cylindrical frame. The recess has a bottom part and a border surrounding the bottom part. The inlet outlet channels are in fluid communication with the recess. The stator cooling housing further comprises an add-on piece mounted into the recess of the cylindrical frame, and a cylindrical jacket arranged against the outer lateral surface of the frame to form with the cylindrical grooves or fins cylindrical cooling channels. The add-on piece comprises a fluid cooling arrangement in fluid communication, on the one hand, with the at least one inlet and outlet channels and, on the other hand, with the cylindrical cooling channels to form at least one cooling circuit. The perimeter of the add-on piece is arranged against the border of the recess.

In an embodiment, the fluid cooling arrangement of the add-on piece comprises grooves and fluid communication portions forming fluid channels with the bottom part of the recess. The fluid channels are arranged to bring the at least one inlet channel and the at least one outlet channel in fluid communication with the cylindrical cooling channels.

In an embodiment, the fluid channels are arranged to bring a first set of inlet and outlet channels in fluid communication with a first portion of the cylindrical cooling channels, and a second set of inlet and outlet channels in fluid communication with a second portion of the cylindrical cooling channels to form two independent cooling circuits.

In an embodiment, a plurality of sets of adjacent cylindrical fins are disposed between adjacent radial extensions. The plurality of sets of adjacent cylindrical fins forms with the cylindrical jacket a corresponding plurality of cylindrical cooling channels with improved thermal exchange between the iron core and the cooling fluid when the stator cooling housing is operating.

In an embodiment, the fluid cooling arrangement of the add-on piece comprises an inlet duct arranged to bring an inlet channel in fluid communication with the uppermost cylindrical cooling channel and an outlet duct arranged to bring an outlet channel in fluid communication with the lowermost cylindrical cooling channel when the axis of the cylindrical frame is vertical.

In an embodiment, the outlet duct extends across the add-on piece from its upper side to its lower side when the axis of the cylindrical frame is vertical.

In an embodiment, the cylindrical frame comprises a plurality of radial extensions extending around the outer lateral surface from one lateral side to another opposite lateral side of the recess.

In an embodiment, an outer side of the add-on piece comprises parallel radial extensions extending from one lateral side to an opposite lateral side of the add-on piece to form several cylindrical extensions with only some of the plurality of radial extensions in order to create fluid communication between two adjacent grooves.

Another aspect of the invention relates to a stator for a rotary electric motor comprising the stator cooling housing as described above and to a rotary electric motor comprising such stator.

A further aspect of the invention relates to a method of manufacturing a stator cooling housing comprising:
- machining a blank of a cylindrical frame, adapted to be mounted around an iron core, by means of a lathe to form cylindrical grooves or adjacent cylindrical fins around an outer lateral surface of the cylindrical frame;
- machining a recess on a portion of the outer lateral surface of the cylindrical frame;
- machining an upper cylindrical portion of the cylindrical frame extending parallelly to the axis of the cylindrical frame to form at least one inlet channel and at least one outlet channel leading into the recess;

- producing an add-on piece comprising a fluid cooling arrangement;
- mounting the add-piece into the recess such that an inner side of said add-on piece rests against the bottom part of the recess, and the fluid cooling arrangement is in fluid communication with the inlet and outlet channels, and
- adjusting a cylindrical jacket against the outer lateral surface of the cylindrical frame to form with the grooves or the fins cylindrical cooling channels in fluid communication with the fluid cooling arrangement of the add-on piece.

In an embodiment, the add-on piece is produced by an additive manufacturing or a molding process.

In an embodiment, the add-on piece is made of a high-temperature resistant rubber material and is shrink fitted into the recess.

In an embodiment, the inner side of the add-on piece is glued against the bottom part of the recess.

In an embodiment, the cylindrical jacket is shrink fitted around the cylindrical frame.

### Brief description of the drawings

The invention will be better understood with the aid of the description of several embodiments given by way of examples and illustrated by the figures, in which:
- Figure 1 shows a perspective view of a cylindrical frame adapted to be mounted around an iron core of a stator of a rotary electric motor according to the prior art;
- Figure 2 shows a perspective view of a cylindrical frame adapted to be mounted around an iron core according to a first embodiment of the invention;
- Figure 3 shows a perspective view of the cylindrical frame of Figure 2 with a rectangular recess on the outer lateral surface of the cylindrical frame;
- Figure 4 shows a perspective view of the cylindrical frame with an add-on piece mounted on the rectangular recess;
- Figure 5 shows a perspective view of the add-on piece from its inner side;
- Figure 6 shows a perspective view of the stator cooling housing comprising a cylindrical jacket arranged against the outer lateral surface of the cylindrical frame of Figure 4;
- Figure 7 shows a perspective view of a cylindrical frame adapted to be mounted around an iron core of a rotary electric motor according to a second embodiment of the invention;
- Figure 8 shows a perspective view of the cylindrical frame of Figure 7 with a rectangular recess on the outer lateral surface of the frame;
- Figure 9 is an axial cross-sectional view of a portion of the cylindrical frame of Figure 8 which is diametrically opposed to the rectangular recess;
- Figure 10 shows a perspective view of the cylindrical frame with an add-on piece mounted on the rectangular recess;
- Figure 11 shows a perspective view of the add-on piece of Figure 10;
- Figure 12 shows an enlarged view of a portion of the cylindrical frame of Figure 8 comprising the recess;
- Figure 13 shows a perspective view of the stator cooling housing comprising a cylindrical jacket arranged against the outer lateral surface of the cylindrical frame of Figure 10;
- Figure 14 is a cross-sectional view of Figure 13 taken along a first section through an inlet duct of the add-on piece;
- Figure 15 is a cross-sectional view of Figure 13 taken along a second section through an outlet duct of the addon-piece, and
- Figure 16 is a cross-sectional view of Figure 13 taken along a third section showing cooling channels.

### Detailed description of several embodiments of the invention

Figure 2 shows a cylindrical cage or frame 12 in metal which is adapted to be mounted around an iron core of a stator, according to a first embodiment of the invention. The metal frame has been machined by means of a lathe to form a plurality of sets 22a, 22b, 22c, 22d of adjacent cylindrical fins 23 disposed between corresponding adjacent cylindrical extensions 24a, 24b, 24c, 24d, 24e. In this particular embodiment, there are four sets of adjacent cylindrical fins 23 separated by five radial cylindrical extensions 24a, 24b, 24c, 24d, 24e although the number of sets of adjacent fins and radial cylindrical extensions may vary according to other embodiments.

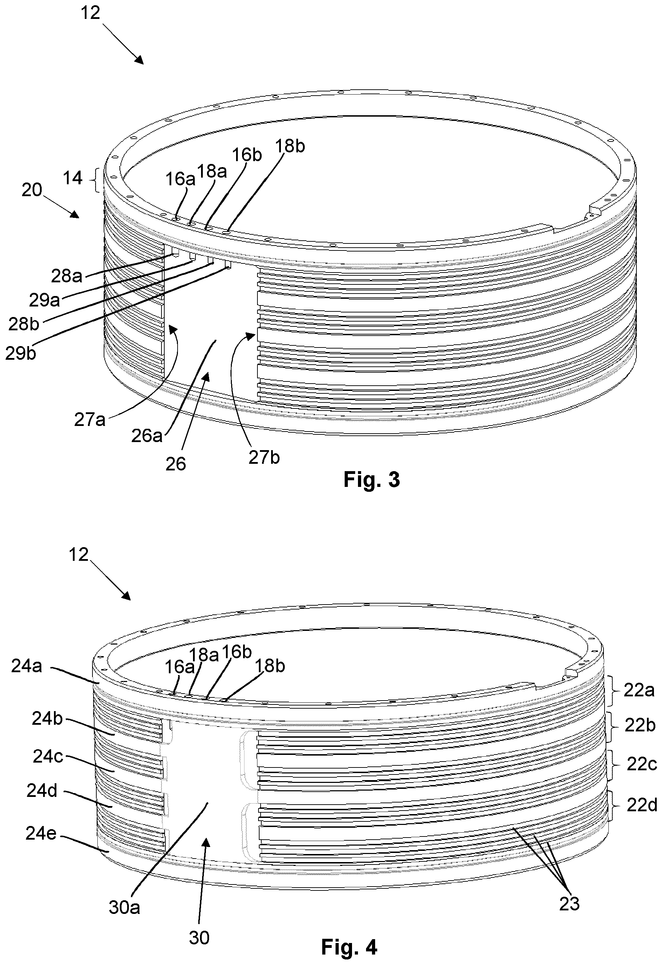

Referring to Figure 3, a portion of the outer lateral surface 20 of the cylindrical frame 12 has been milled to create a recess 26 with a bottom part 26a, which is typically a plane surface. The recess 26 has preferably a rectangular shape extending from an upper portion to a lower portion of the cylindrical frame 12 and comprising a first and a second opposite lateral sides 27a, 27b. A first set of inlet and outlet channels 16a, 18a and a second set of inlet and outlet channels 16b, 18b have been drilled through the upper portion 14 of the cylindrical frame 12 and through corresponding portions of the upper region of the bottom part 26a of the recess 26 to create a first and a second inlet groove 28a, 28b as well as a first and a second outlet grooves 29a, 29b.

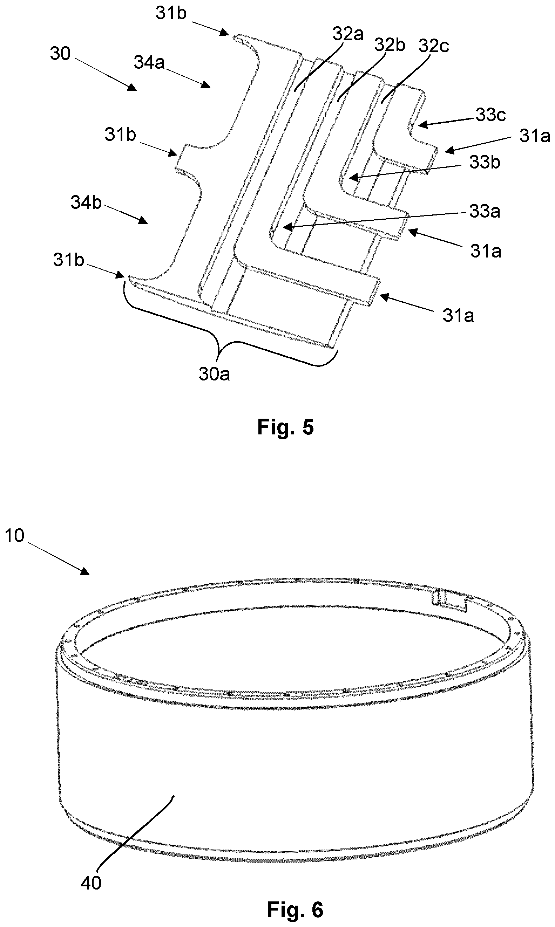

An add-on piece 30, illustrated in Figure 5, is produced by an additive manufacturing process, or a molding process. The add-on piece 30 comprises a fluid cooling arrangement 30a and is designed to be shrink fitted inside the recess 26 as shown in Figure 4. This add-on piece 30 is usually manufactured using high-temperature resistant rubber which can withstand a shrink fitting operation and the various additives such as glycol which are typically used in cooling fluids. The add-on piece 30 may however be made of another material less malleable and may be glued against the bottom part 26a of the recess according to another embodiment.

As shown in Figures 4 and 5, the add-on piece 30 comprises a curved surface 30a on its outer side and the fluid cooling arrangement 30a on its inner side. The radius of curvature of the curved surface 30a corresponds substantially to the radius of curvature of the outer lateral surface 20 of the cylindrical frame 12 and the thickness of the add-on piece 30 corresponds to the depth of the recess 26 to form a smooth continuation through the interfaces between opposite lateral side portions 31a, 31b of the add-on piece 30 and the corresponding opposite lateral sides 27a, 27b of the recess 26.

The fluid cooling arrangement 30a of the add-on piece 30 is configured to create two distinct cooling circuits when a cylindrical jacket 40 is arranged around and against the outer lateral surface 20 of the cylindrical frame as shown in Figure 6, for example by a shrink fitting operation.

More particularly, the fluid cooling arrangement 30a of the add-on piece 30 of Figure 5 comprises three L-shaped raised portions 33a, 33b, 33c, three substantially L-shaped grooves 32a, 32b, 32c as well as a first and a second fluid communication portion 34a, 34b.

When the add-on piece 30 is shrink fitted into the recess 26 as shown in Figure 4 and the cylindrical jacket 40 is arranged around and against the outer lateral surface 20 of the cylindrical frame, the bottom part 26a of the recess 26 forms with:
- the L-shaped raised portion 33c a L-shaped channel that brings the first inlet channel 16a in fluid communication with a first end portion of the uppermost set 22a of adjacent cylindrical fins 23 located on the first side lateral side 27a of the recess 26;
- the first fluid communication portion 34a a first semi-oblong cavity that brings a second end portion of the uppermost set 22a of adjacent cylindrical fins 23, located on the second lateral side 27b of the recess 26, in fluid communication with a first end portion of a second set 22b of adjacent cylindrical fins located on the same lateral side 27b of the recess 26, and
- the L-shaped groove 32c a L-shaped channel that brings a second end portion of the second set 22b of adjacent cylindrical fins 23 in fluid communication with a first outlet channel 18a in order to form a first cooling circuit.

In addition, in the configuration set forth above, the bottom part 26a of the recess 26 forms with:
- the L-shaped groove 32b a L-shaped channel that brings a second inlet channel 16b in fluid communication with a first end portion of a third set 22c of adjacent cylindrical fins 23 located on the first lateral side 27a of the recess 26;
- the second fluid communication portion 34b a second semi-oblong cavity that brings a second end portion of the third set 22c of adjacent cylindrical fins 23, located on the second lateral side 27b of the recess 26, in fluid communication with a first end portion of a lowermost set 22d of cylindrical fins 23 located on the same lateral side 27b of the recess 26, and
- the L-shaped groove 32a a L-shaped channel that brings a second end portion of the lowermost set 22d of cylindrical grooves in fluid communication with a second outlet channel 18b in order to form a second cooling circuit.

Under cooling operation, a first cooling liquid runs through the first cooling circuit, i.e. successively through the first inlet channel 16a, the first inlet groove 28a (Figure 3) into the L-shaped channel (formed with the L-shaped raised portion 33c and the bottom part 26a of the recess), through the uppermost set 22a of adjacent cylindrical fins 23 in a clockwise direction around the cylindrical frame 12 spanning approximately 300°- 320°, into the first semi-oblong cavity, through the second set 22b of adjacent cylindrical fins in an anticlockwise direction around the cylindrical frame 12 spanning approximately 300°-320°, through the L-shaped channel (formed with the L-shaped groove 32c and the bottom part 26a of the recess) and finally through the first outlet groove 29a and the first outlet channel 18a.

A second cooling liquid runs through the second cooling circuit, i.e. successively through the second inlet channel 16b, the second inlet groove 28b (Figure 3), the L-shaped channel (formed with the L-shaped groove 32b and the bottom part 26a of the recess), through the third set 22c of adjacent cylindrical fins in a clockwise direction around the cylindrical frame 12 spanning approximately 300°-320°, into the second semi-oblong cavity, through the lowermost set 22d of adjacent cylindrical fins in an anticlockwise direction around the cylindrical frame 12 spanning approximately 300°-320°, through the L-shaped channel (formed with the L-shaped groove 32a and the bottom part 26a of the recess) and finally through the second outlet groove 29b and the second outlet channel 18b.

The different sets of adjacent cylindrical fins advantageously increase thermal exchange between the cooling fluid and the cylindrical frame of the stator mounted around the iron core, thereby providing a first and a second cooling circuit with improved reduction of the heat generated by the stator coils.

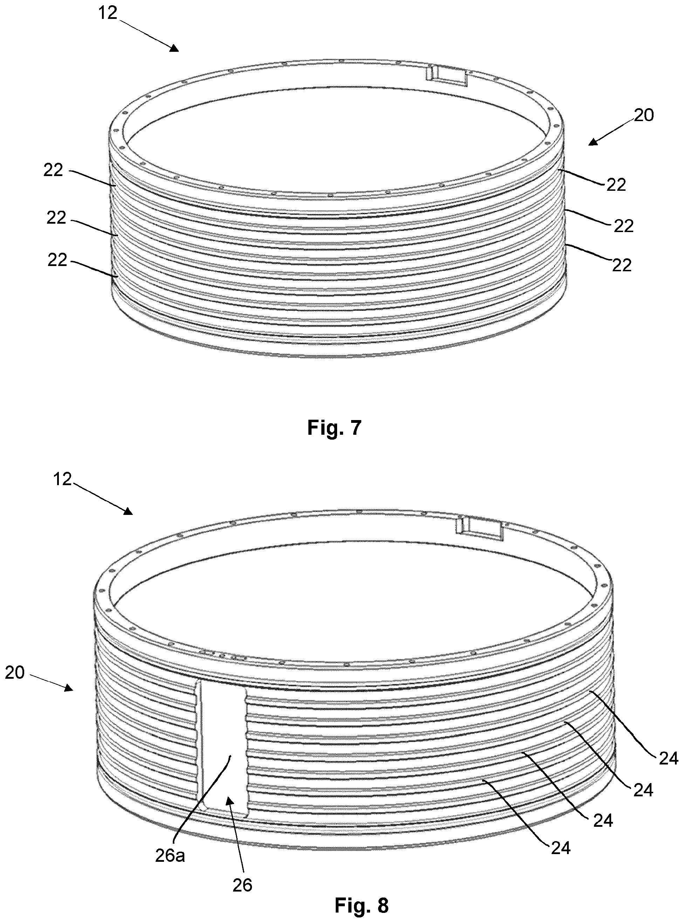

Figure 7 shows a cylindrical frame 12 of a stator which has been machined by means of a lathe to form cylindrical grooves 22 according to a second embodiment of the invention. The cylindrical grooves 22 are regularly spaced apart from each other around the outer lateral surface 20 of the cylindrical frame 12 by radial cylindrical extensions 24 (Figure 8).

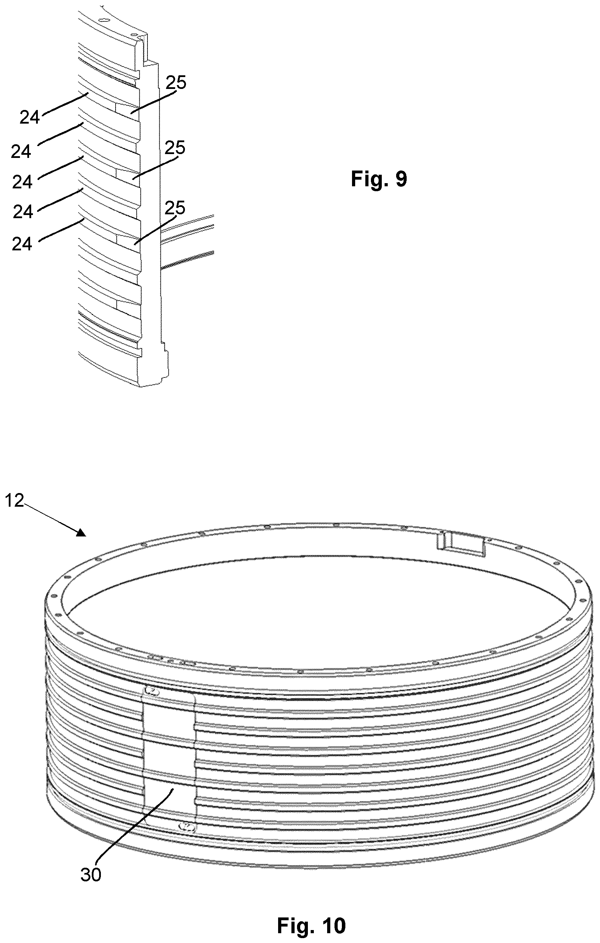

With reference to Figure 8, a portion of the outer lateral surface 20 of the cylindrical frame has been milled to create a recess 26 with a bottom part 26a, which is typically a flat surface. The recess 26 has preferably a rectangular shape extending from an upper portion to a lower portion of the cylindrical frame 12. As shown in Figure 9, the cylindrical frame 12 has been machined such that every other cylindrical extensions 24 comprise a cut-off portion 25 which are diametrically opposed to the rectangular recess 26.

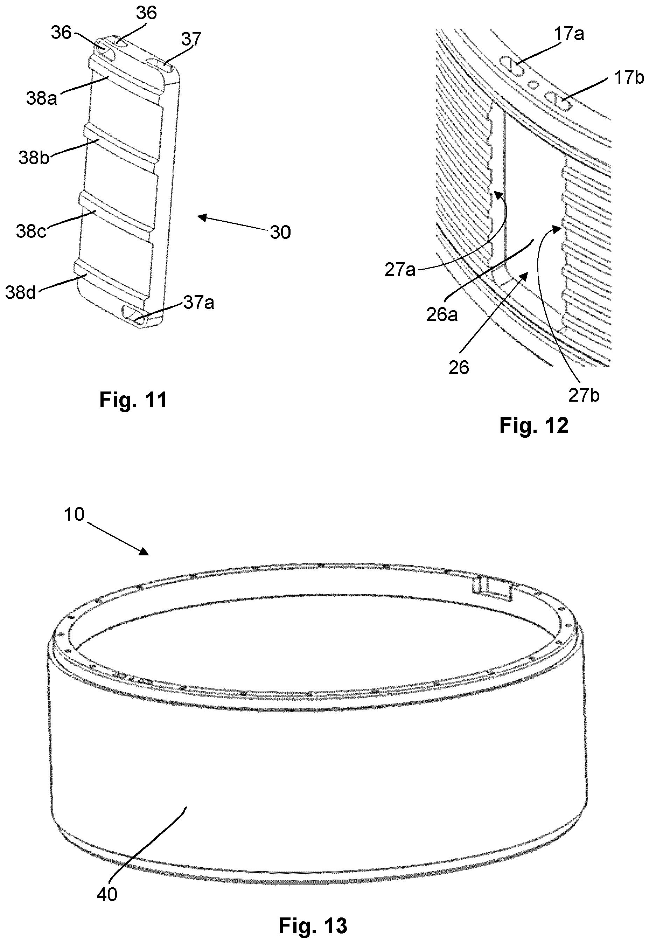

An add-on piece 30, illustrated in Figure 11, is produced by an additive manufacturing process or molding a process and is shrink fitted into the recess of the cylindrical frame 12 as shown in Figure 10.

The add-on piece 30 comprises on a front side raised portions or extensions 38a, 38b, 38c, 38d with a constant width corresponding to the width of the cylindrical extensions 24 of the cylindrical frame 12. These raised portions extend from one lateral side to an opposite lateral side of the add-on piece 30 and are disposed to form a continuous junction with every other cylindrical extensions 24 at both interfaces between the lateral sides of the add-on piece 30 and the corresponding lateral sides 27a, 27b of the rectangular recess 26. The cut-off portions 25 and the raised portions 38a, 38b, 38c, 38d are offset by one cylindrical extension to form a cooling circuit a described in detail subsequently.

The add-on piece 30 of Figure 11 comprises an inlet duct 36 on its upper side and an outlet duct 37 extending from its upper side to its lower side. The upper portion of the cylindrical frame 12, as shown in Figure 12, comprises an inlet channel 17a and an outlet channel 17b both extending from a portion of a top annular surface into respectively the inlet and outlet ducts 36, 37 of the add-on piece 30.

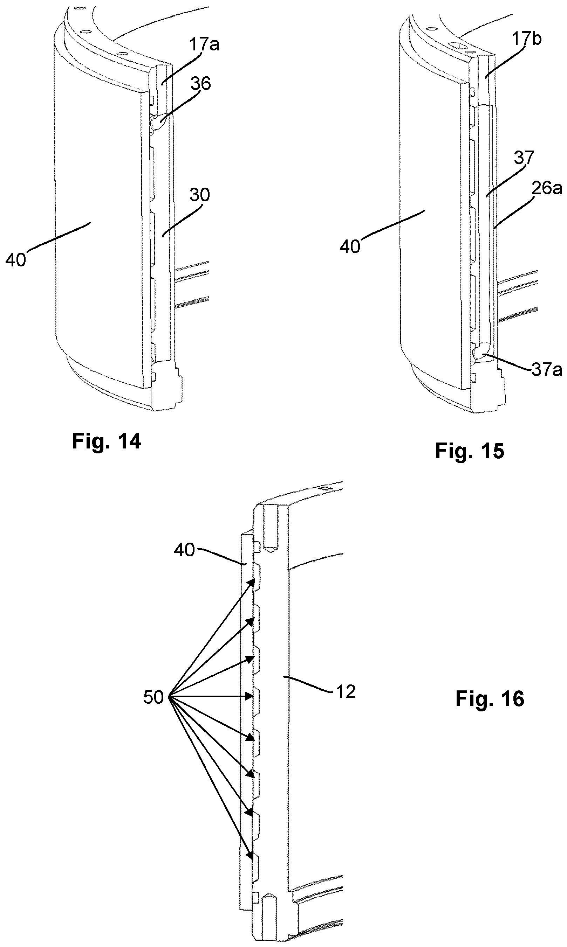

The cooling circuit comprises cylindrical cooling channels 50, as shown in Figure 16, that are formed when the cylindrical jacket 40 is arranged around and against the outer lateral surface of the cylindrical frame as shown in Figure 13, preferably by a shrink fitting operation.

Under cooling operation, a cooling fluid is drawn from the inlet channel 17a into the inlet duct 36 (Figure 14) which then separates to run through the uppermost cooling channel 50 in clockwise and counter-clockwise directions spanning approximately 180°, through a cut-off portion 25 into a lower cooling channel 50 (Figure 16) in clockwise and counter-clockwise directions spanning approximately 180° until it reaches one interface between the add-on piece 30 and the cylindrical frame 12, whereupon the cooling fluid runs into a lower cooling channel 50 and so on until it reaches an end portion 37a of the outlet duct 37 as shown in Figure 15, whereupon the cooling fluid is sucked in a upward direction along the outlet duct 37 to exit the outlet channel 17b. The cooling fluid therefore runs along clockwise and counter-clockwise spiral paths around the outer lateral surface of the cylindrical frame 12.

Various modifications and variations to the described embodiments of the invention will be apparent to those skilled in the art without departing from the scope of the invention as defined in the appended claims. For example, the grooves of the cylindrical frame of the second embodiment may be replaced by cylindrical fins as described in the first embodiment of the invention.

### Reference list

Stator cooling housing 10
Cylindrical frame 12
   Upper cylindrical portion 14
      1^{st} embodiment
      First and second inlet channels 16a, 16b
      First and second outlet channels 18a, 18b
      2^{nd} embodiment
      Inlet and outlet channels 17a, 17b
   Outer lateral surface 20
      Cylindrical grooves 22
         Sets of adjacent fins 22a, 22b, 22c, 22d (1^{st} embodiment)
      Radial extensions 24; 24a, 24b, 24c, 24d, 24e
      Cut-off portion 25 (2^{nd} embodiment)
Recess 26
   Rectangular recess
   Bottom part 26a
   Lateral sides 27a, 27b
First and second inlet grooves 28a, 28b (1^{st} embodiment)
First and second outlet grooves 29a, 29b (1^{st} embodiment)
Add-on piece 30
   Fluid cooling arrangement 30a
   Curved surface 31
      Lateral side portions 31a, 31b
   1^{st} embodiment
   Grooves 32a, 32b, 32c
   L-shaped portions 33a, 33b, 33c
   Fluid communication portions 34a, 34b
   2^{nd} embodiment
   Inlet duct 36
   Outlet duct 37
      End portion 37a
   Radials extensions 38a, 38b, 38c, 38d
Cylindrical jacket 40
Cooling channels 50

## Claims

1. Stator cooling housing (10) for a stator of a rotary electric motor, comprising:
a cylindrical frame (12) adapted to be mounted around an iron core and having an outer lateral surface (20) with cylindrical grooves (22) or fins (23), the cylindrical frame (12) comprising a recess (26) on a portion of the outer lateral surface, the recess (26) having a bottom part (26a) and a border surrounding the bottom part, at least one inlet channel (17a; 16a, 16b) and at least one outlet channel (17b; 18a, 18b) in fluid communication with the recess (26),
an add-on piece (30) mounted into said recess (26), and
a cylindrical jacket (40) arranged against the outer lateral surface (20) of the cylindrical frame (12) to form with said cylindrical grooves (22) or fins (23) cylindrical cooling channels (50),
wherein the add-on piece (30) comprises a fluid cooling arrangement (30a) in fluid communication, on the one hand, with said at least one inlet channel (17a; 16a, 16b) and said at least one outlet channel (17b; 18a, 18b) and, on the other hand, with said cylindrical cooling channels (50) to form at least one cooling circuit
**characterized in that** the perimeter of the add-on piece (30) is arranged against the border of the recess (26).

2. The stator cooling housing (10) according to claim 1, wherein the fluid cooling arrangement (30a) of the add-on piece (30) comprises grooves (32a, 32b, 32c) and fluid communication portions (34a, 34b) forming fluid channels with the bottom part (26a) of the recess (26), wherein said fluid channels are arranged to bring said at least one inlet channel (17a; 16a, 16b) and said at least one outlet channel (17b; 18a, 18b) in fluid communication with said cylindrical cooling channels (50).

3. The stator cooling housing (10) according to the preceding claim, wherein said fluid channels are arranged to bring a first set of inlet and outlet channels (16a, 18a) in fluid communication with a first portion of said cylindrical cooling channels, and a second set of inlet and outlet channels (16b, 18b) in fluid communication with a second portion of said cylindrical cooling channels to form two independent cooling circuits.

4. The stator cooling housing (10) according to any preceding claim, wherein a plurality of sets (22a, 22b, 22c, 22d) of adjacent cylindrical fins (23) are disposed between adjacent radial extensions (24), said plurality of sets of adjacent cylindrical fins forming with the cylindrical jacket (40) a corresponding plurality of cylindrical cooling channels with improved thermal exchange between the iron core and the cooling fluid when the stator cooling housing (10) is operating.

5. The stator cooling housing (10) according to claim 1, wherein the fluid cooling arrangement of the add-on piece (30) comprises an inlet duct (36) arranged to bring an inlet channel (17a) in fluid communication with the uppermost cylindrical cooling channel and an outlet duct (37) arranged to bring an outlet channel (17b) in fluid communication with the lowermost cylindrical cooling channel when the axis of the cylindrical frame (12) is vertical.

6. The stator cooling housing (10) according to the preceding claim, wherein said outlet duct (37) extends across the add-on piece (30) from its upper side to its lower side when the axis of the cylindrical frame (12) is vertical.

7. The stator cooling housing (10) according to claim 5 or 6, wherein the cylindrical frame (12) comprises a plurality of radial extensions (24) extending around the outer lateral surface (30) from one lateral side (27a) to another opposite lateral side (27b) of the recess (26).

8. The stator cooling housing (10) according to the preceding claim, wherein the outer side of the add-on piece (30) comprises parallel radial extensions (38a, 38b, 38c, 38d) extending from one lateral side to an opposite lateral side of the add-on piece (30) to form several cylindrical extensions with only some of said plurality of radial extensions (24) in order to create fluid communication between two adjacent grooves (22).

9. A stator for a rotary electric motor comprising the stator cooling housing (10) according to any preceding claim.

10. A rotary electric motor comprising the stator according to the preceding claim.

11. Method of manufacturing a stator cooling housing (10) according to any of claims 1 to 8, comprising:
- machining a blank of a cylindrical frame (12), adapted to mounted around an iron core, by means of a lathe to form cylindrical grooves (22) or fins (23) around an outer lateral surface (20) of the cylindrical frame;
- machining a recess (26) on a portion of the outer lateral surface (20) of the cylindrical frame (12);
- machining an upper cylindrical portion (14) of the cylindrical frame (12), said upper cylindrical portion (14) extending parallelly to the axis of the cylindrical frame, to form at least one inlet channel (17a; 16a, 16b) and at least one outlet channel (17b; 18a, 18b) leading into the recess (26),
- producing an add-on piece (30) comprising a fluid cooling arrangement (30a);
- mounting the add-on piece (30) into the recess (26) such that an inner side of said add-on piece (30) rests against a bottom part (26a) of the recess, and the fluid cooling arrangement (30a) is in fluid communication with said at least one inlet channel (17a; 16a, 16b) and said at least one outlet channel (17b; 18a, 18b), and
- adjusting a cylindrical jacket (40) against the outer lateral surface (20) of the cylindrical frame (12) to form with the cylindrical grooves (22) or fins (23) cylindrical cooling channels in fluid communication with the fluid cooling arrangement (30a) of the add-on piece (30).

12. The method according to claim 11, wherein the add-on piece (30) is produced by an additive manufacturing or molding process.

13. The method according to claim 11 or 12, wherein the add-on piece (30) is made of a high-temperature resistant rubber material and is shrink fitted into the recess (26).

14. The method according to claim 11 or 12, wherein said inner side of the add-on piece (30) is glued against the bottom part (26a) of the recess (26).

15. The method according to any of claims 11 to 14, wherein the cylindrical jacket is shrink fitted around the cylindrical frame.

## Patentansprüche

1. Statorkühlgehäuse (10) für einen Stator eines rotierenden Elektromotors, Folgendes umfassend:
einen zylindrischen Rahmen (12), der dazu eingerichtet ist, um einen Eisenkern herum montiert zu sein, und eine laterale Außenfläche (20) mit zylindrischen Nuten (22) oder Lamellen (23) aufweist, wobei der zylindrische Rahmen (12) eine Aussparung (26) an einem Abschnitt der lateralen Außenfläche umfasst, wobei die Aussparung (26) einen Bodenteil (26a) und eine den Bodenteil umgebende Begrenzung aufweist, wobei mindestens ein Einlasskanal (17a; 16a, 16b) und mindestens ein Auslasskanal (17b; 18a, 18b) mit der Aussparung (26) in Fluidverbindung stehen,
ein Anbauteil (30), das in die Aussparung (26) montiert ist, und
einen zylindrischen Mantel (40), der an der lateralen Außenfläche (20) des zylindrischen Rahmens (12) anliegend angeordnet ist, um mit den zylindrischen Nuten (22) oder Lamellen (23) zylindrische Kühlkanäle (50) auszubilden,
wobei das Anbauteil (30) eine Fluidkühlanordnung (30a) umfasst, die einerseits mit dem mindestens einen Einlasskanal (17a; 16a, 16b) und dem mindestens einen Auslasskanal (17b; 18a, 18b) und andererseits mit den zylindrischen Kühlkanälen (50) in Fluidverbindung steht, um mindestens einen Kühlkreislauf auszubilden,
**dadurch gekennzeichnet, dass** der Außenrand des Anbauteils (30) an der Begrenzung der Aussparung (26) anliegend angeordnet ist.

2. Statorkühlgehäuse (10) nach Anspruch 1, wobei die Fluidkühlanordnung (30a) des Anbauteils (30) Nuten (32a, 32b, 32c) und Fluidverbindungsabschnitte (34a, 34b) umfasst, die Fluidkanäle mit dem Bodenteil (26a) der Aussparung (26) ausbilden, wobei die Fluidkanäle dazu angeordnet sind, den mindestens einen Einlasskanal (17a; 16a, 16b) und den mindestens einen Auslasskanal (17b; 18a, 18b) mit den zylindrischen Kühlkanälen (50) in Fluidverbindung zu bringen.

3. Statorkühlgehäuse (10) nach dem vorstehenden Anspruch, wobei die Fluidkanäle dazu angeordnet sind, einen ersten Satz Einlass- und Auslasskanäle (16a, 18a) mit einem ersten Abschnitt der zylindrischen Kühlkanäle und einen zweiten Satz Einlass- und Auslasskanäle (16b, 18b) mit einem zweiten Abschnitt der zylindrischen Kühlkanäle in Fluidverbindung zu bringen, um zwei unabhängige Kühlkreisläufe auszubilden.

4. Statorkühlgehäuse (10) nach einem der vorstehenden Ansprüche, wobei mehrere Sätze (22a, 22b, 22c, 22d) angrenzender zylindrischer Lamellen (23) zwischen angrenzenden radialen Ausdehnungen (24) angeordnet sind, wobei die mehreren Sätze angrenzender zylindrischer Lamellen mit dem zylindrischen Mantel (40) zugehörige mehrere zylindrische Kühlkanäle mit einem verbesserten Wärmeaustausch zwischen dem Eisenkern und dem Kühlfluid, wenn sich das Statorkühlgehäuse (10) im Betrieb befindet, ausbilden.

5. Statorkühlgehäuse (10) nach Anspruch 1, wobei die Fluidkühlanordnung des Anbauteils (30) eine Einlassleitung (36), die dazu angeordnet ist, einen Einlasskanal (17a) mit dem obersten zylindrischen Kühlkanal in Fluidverbindung zu bringen, und eine Auslassleitung (37), die dazu angeordnet ist, einen Auslasskanal (17b) mit dem untersten zylindrischen Kühlkanal, wenn die Achse des zylindrischen Rahmens (12) vertikal ist, in Fluidverbindung zu bringen, umfasst.

6. Statorkühlgehäuse (10) nach dem vorstehenden Anspruch, wobei sich die Auslassleitung (37) von dessen Oberseite zu dessen Unterseite über das Anbauteil (30) erstreckt, wenn die Achse des zylindrischen Rahmens (12) vertikal ist.

7. Statorkühlgehäuse (10) nach Anspruch 5 oder 6, wobei der zylindrische Rahmen (12) mehrere radiale Ausdehnungen (24) umfasst, die sich von einer lateralen Seite (27a) zu einer anderen, gegenüberliegenden lateralen Seite (27b) der Aussparung (26) um die laterale Außenfläche (30) herum erstrecken.

8. Statorkühlgehäuse (10) nach dem vorstehenden Anspruch, wobei die Außenseite des Anbauteils (30) parallele radiale Ausdehnungen (38a, 38b, 38c, 38d) umfasst, die sich von einer lateralen Seite zu einer entgegengesetzten lateralen Seite des Anbauteils (30) erstrecken, um nur mit einigen der mehreren radialen Ausdehnungen (24) mehrere zylindrische Ausdehnungen auszubilden, um eine Fluidverbindung zwischen zwei angrenzenden Nuten (22) zu erzeugen.

9. Stator für einen rotierenden Elektromotor, umfassend das Statorkühlgehäuse (10) nach einem der vorstehenden Ansprüche.

10. Rotierender Elektromotor, umfassend den Stator nach dem vorstehenden Anspruch.

11. Verfahren zur Herstellung eines Statorkühlgehäuses (10) nach einem der Ansprüche 1 bis 8, Folgendes umfassend:
- Bearbeiten eines Rohlings eines zylindrischen Rahmens (12), der dazu eingerichtet ist, um einen Eisenkern herum montiert zu sein, mittels einer Drehmaschine, um zylindrische Nuten (22) oder Lamellen (23) um eine laterale Außenfläche (20) des zylindrischen Rahmens auszubilden;
- Bearbeiten einer Aussparung (26) an einem Abschnitt der lateralen Außenfläche (20) des zylindrischen Rahmens (12);
- Bearbeiten eines oberen zylindrischen Abschnitts (14) des zylindrischen Rahmens (12), wobei sich der obere zylindrische Abschnitt (14) parallel zur Achse des zylindrischen Rahmens erstreckt, um mindestens einen Einlasskanal (17a; 16a, 16b) und mindestens ein Auslasskanal (17b; 18a, 18b) auszubilden, die in die Aussparung (26) führen,
- Herstellen eines Anbauteils (30), umfassend eine Fluidkühlanordnung (30a);
- Montieren des Anbauteils (30) in der Aussparung (26), sodass eine Innenseite des Anbauteils (30) an einem Bodenteil (26a) der Aussparung anliegt,
und wobei die Fluidkühlanordnung (30a) mit dem mindestens einen Einlasskanal (17a; 16a, 16b) und dem mindestens einen Auslasskanal (17b; 18a, 18b) in Fluidverbindung steht und
- Einstellen eines zylindrischen Mantels (40) an der lateralen Außenfläche (20) des zylindrischen Rahmens (12), um mit den zylindrischen Nuten (22) oder Lamellen (23) zylindrische Kühlkanäle auszubilden, die mit der Fluidkühlanordnung (30a) des Anbauteils (30) in Fluidverbindung stehen.

12. Verfahren nach Anspruch 11, wobei das Anbauteil (30) durch ein additives Fertigungs- oder Formungsverfahren hergestellt ist.

13. Verfahren nach Anspruch 11 oder 12, wobei das Anbauteil (30) aus einem hochtemperaturbeständigen Kautschukmaterial gefertigt ist und in die Aussparung (26) eingeschrumpft ist.

14. Verfahren nach Anspruch 11 oder 12, wobei die Innenseite des Anbauteils (30) am Bodenteil (26a) der Aussparung (26) verklebt ist.

15. Verfahren nach einem der Ansprüche 11 bis 14, wobei der zylindrische Mantel um den zylindrischen Rahmen herum aufgeschrumpft ist.

## Revendications

1. Châssis de refroidissement (10) pour un stator de moteur électrique rotatif, comprenant :
un cadre cylindrique (12) adapté pour être monté autour d'un noyau de fer et ayant une surface latérale extérieure (20) avec des rainures cylindriques (22) ou des ailettes (23), le cadre cylindrique (12) comprenant un renfoncement (26) sur une partie de la surface latérale extérieure, le renfoncement (26) ayant une partie de fond (26a) et un bord entourant la partie de fond, au moins un canal d'entrée (17a; 16a, 16b) et au moins un canal de sortie (17b; 18a, 18b) en communication fluidique avec le renfoncement (26),
une pièce rapportée (30) montée dans ledit renfoncement (26), et
une enveloppe cylindrique (40) disposée contre la surface latérale extérieure (20) du cadre cylindrique (12) pour former avec lesdites rainures cylindriques (22) ou ailettes (23) des canaux de refroidissement cylindriques (50),
dans lequel la pièce rapportée (30) comprend un agencement de refroidissement de fluide (30a) en communication fluidique, d'une part, avec ledit au moins un canal d'entrée (17a; 16a, 16b) et ledit au moins un canal de sortie (17b; 18a, 18b) et, d'autre part, avec lesdits canaux de refroidissement cylindriques (50) afin de former au moins un circuit de refroidissement
**caractérisé en ce que** le périmètre de la pièce rapportée (30) est disposé contre le bord du renfoncement (26).

2. Le châssis de refroidissement (10) selon la revendication 1, dans lequel l'agencement de refroidissement de fluide (30a) de la pièce rapportée (30) comprend des rainures (32a, 32b, 32c) et des portions de communication fluidique (34a, 34b) formant des canaux fluidiques avec la partie de fond (26a) du renfoncement (26), dans lequel lesdits canaux de fluides sont agencés pour amener ledit au moins un canal d'entrée (17a; 16a, 16b) et ledit au moins un canal de sortie (17b ; 18a, 18b) en communication fluidique avec lesdits canaux de refroidissement cylindriques (50).

3. Le châssis de refroidissement (10) selon la revendication précédente, dans lequel lesdits canaux fluidiques sont disposés de manière à amener un premier ensemble de canaux d'entrée et de sortie (16a, 18a) en communication fluidique avec une première portion desdits canaux de refroidissement cylindriques, et un second ensemble de canaux d'entrée et de sortie (16b, 18b) en communication fluidique avec une seconde portion desdits canaux de refroidissement cylindriques, afin de former deux circuits de refroidissement indépendants.

4. Le châssis de refroidissement (10) selon l'une des revendications précédentes, dans lequel une pluralité d'ensembles (22a, 22b, 22c, 22d) d'ailettes cylindriques adjacentes (23) sont disposées entre des extensions radiales adjacentes (24), ladite pluralité d'ensembles d'ailettes cylindriques adjacentes formant avec l'enveloppe cylindrique (40) une pluralité correspondante de canaux de refroidissement cylindriques avec un échange thermique amélioré entre le noyau de fer et le fluide de refroidissement lorsque le châssis de refroidissement (10) est en fonctionnement.

5. Le châssis de refroidissement (10) selon la revendication 1, dans lequel l'agencement de refroidissement de fluide de la pièce rapportée (30) comprend un conduit d'entrée (36) agencé pour amener un canal d'entrée (17a) en communication fluidique avec le canal de refroidissement cylindrique le plus haut et un conduit de sortie (37) agencé pour amener un canal de sortie (17b) en communication fluidique avec le canal de refroidissement cylindrique le plus bas lorsque l'axe du cadre cylindrique (12) est vertical.

6. Le châssis de refroidissement (10) selon la revendication précédente, dans lequel ledit conduit de sortie (37) s'étend à travers la pièce rapportée (30) de son côté supérieur à son côté inférieur lorsque l'axe du cadre cylindrique (12) est vertical.

7. Le châssis de refroidissement (10) selon la revendication 5 ou 6, dans lequel le cadre cylindrique (12) comprend une pluralité d'extensions radiales (24) s'étendant autour de la surface latérale extérieure (20) d'un côté latéral (27a) à un autre côté latéral opposé (27b) du renfoncement (26).

8. Le châssis de refroidissement (10) selon la revendication précédente, dans lequel le côté extérieur de la pièce rapportée (30) comprend des extensions radiales parallèles (38a, 38b, 38c, 38d) s'étendant d'un côté latéral à un côté latéral opposé de la pièce rapportée (30) pour former plusieurs extensions cylindriques avec seulement certaines de ladite pluralité d'extensions radiales (24) afin de créer une communication fluidique entre deux rainures adjacentes (22).

9. Un stator pour moteur électrique rotatif, comprenant le châssis de refroidissement (10) selon l'une des revendications précédentes.

10. Un moteur électrique rotatif comprenant le stator selon la revendication précédente.

11. Procédé de fabrication d'un châssis de refroidissement (10) selon l'une des revendications 1 à 8, comprenant :
- usiner une ébauche d'un cadre cylindrique (12), adaptée pour être montée autour d'un noyau de fer, au moyen d'un tour pour former des rainures cylindriques (22) ou des ailettes (23) autour d'une surface latérale extérieure (20) du cadre cylindrique ;
- usiner un renfoncement (26) sur une partie de la surface latérale extérieure (20) du cadre cylindrique (12) ;
- usiner une partie cylindrique supérieure (14) du cadre cylindrique (12), ladite partie cylindrique supérieure (14) s'étendant parallèlement à l'axe du cadre cylindrique, pour former au moins un canal d'entrée (17a; 16a, 16b) et au moins un canal de sortie (17b; 18a, 18b) débouchant dans le renfoncement (26),
- produire une pièce rapportée (30) comprenant un agencement de refroidissement de fluide (30a) ;
- monter la pièce rapportée (30) dans le renfoncement (26) de sorte qu'un côté intérieur de ladite pièce rapportée (30) repose contre une partie du fond (26a) du renfoncement, et que l'agencement de refroidissement de fluide (30a) soit en communication fluidique avec ledit au moins un canal d'entrée (17a; 16a, 16b) et ledit au moins un canal de sortie (17b; 18a, 18b), et
- ajuster une enveloppe cylindrique (40) contre la surface latérale extérieure (20) du cadre cylindrique (12) pour former avec les rainures cylindriques (22) ou les ailettes (23) des canaux de refroidissement cylindriques en communication fluidique avec l'agencement de refroidissement de fluide (30a) de la pièce rapportée (30).

12. Le procédé selon la revendication 11, dans lequel la pièce rapportée (30) est produite par un procédé de fabrication additive ou de moulage.

13. Le procédé selon la revendication 11 ou 12, dans lequel la pièce rapportée (30) est faite d'un matériau en caoutchouc résistant aux hautes températures et est frettée dans le renfoncement (26).

14. Le procédé selon la revendication 11 ou 12, dans lequel le côté intérieur de la pièce rapportée (30) est collé contre la partie de fond (26a) du renfoncement (26).

15. Le procédé selon l'une des revendications 11 à 14, dans lequel l'enveloppe cylindrique est frettée autour du cadre cylindrique.
